# EUROPEAN PATENT APPLICATION

(11) **EP 2 306 607 A2**
(43) Date of publication of application: **06.04.2011**
(21) Application number: 11150649.9
(22) Date of filing: 30.08.2010
(51) Int. Cl.: H02H 3/02, H02H 7/26

(54) **Device and method to protect an electric power distribution network against current faults**

(30) Priority: 31.08.2009 NL 2003410
(62) Divisional of application: 10174455.5
(71) Applicant: EMforce B.V., 2923 GP Krimpen aan den IJssel (NL)
(72) Inventor: Van Overbeeke, Frank, 3065 LG, Rotterdam (NL)
(74) Representative: Mertens, Hans Victor

(57) **Abstract**

An electric power distribution network is protected against a current fault. The electric power distribution network incorporates a plurality of safety devices to electrically isolate a part of the electric power distribution network when the current through a safety device exceeds a predetermined activation threshold. In the electric power distribution network, a short circuit condition can be detected by a voltage dip. In a network protection device, electric energy is stored in an energy buffer. Upon detecting a voltage dip in the electric power distribution network, the network protection device discharges at least part of the stored energy electrically into the electric power distribution network, while generating a discharge current which is at least as high as to activate the safety device with the highest activation threshold in the electric power distribution network.

## Description

### FIELD OF THE INVENTION

The invention relates to the field of electric power distribution networks, and more specifically to a device for protection of an electric power distribution network against current faults. The electric power distribution network comprises a plurality of safety devices to electrically isolate a part of the EPDN when the current through the safety device exceeds a predetermined activation threshold.

### BACKGROUND OF THE INVENTION

Protection in low-voltage, LV, electric power distribution networks, EPDNs, against current faults is based almost entirely on the use of safety devices like thermal fuses or automatic circuit breakers with tripping characteristics comparable to thermal fuses. This approach is driven by cost, since the number of protection devices in low-voltage networks is so huge that more sophisticated solutions cannot be economically justified.

In traditional LV networks a distribution transformer is a node where power is supplied to the LV network. A fault level at the terminals of the transformer is determined mainly by the impedance of the transformer. The impedance of medium voltage, MV, and high voltage, HV, networks is much lower and can be neglected for a first-order calculation of the fault level.

If, for example, a 400 kVA, 400 V distribution transformer has an impedance voltage of 5%, a single-phase fault current at the terminals of the transformer is 11.6 kA. Assuming that the transformer feeds a network with 150 mm² Al cables, each carrying a maximum load current of 100 A per phase, then each cable would be protected at the transformer terminals by a fuse of, for example, 200 A. The single-phase fault current at the end of 1 km of cable is 575 A. This current would not trip the 200 A fuse within an acceptable time interval.

Therefore fuses are installed at one or more intermediate positions, where the rating of each fuse decreases when the distance to the transformer terminals increases. Such an approach provides the additional advantage of selectivity, because a fault at a far end of the cable only leads to disconnection of a small part of the network.

Introducing distributed electric power generation in such a network leads to a number of possible complications.

Firstly, generators connected at other nodes than the main LV rail at the distribution transformer may affect the protection philosophy and the selectivity of the protections if they contribute significantly to a local fault level.

Secondly, if the network is a microgrid operated in island mode, a fault current normally provided by the MV network is not longer available. If the majority of the generators in the network has power electronic interfaces, the available fault current is not much higher than the nominal operating current. As a result, the protection in the network based on thermal fuses is no longer effective.

Additionally, this introduces a risk of a complete collapse of the network if a fault occurs e.g. at a customer's premise. As the probability of such faults is relatively high, an additional arrangement is necessary to ensure that such faults can be reliably detected and isolated without affecting the continuity of the rest of the network.

### SUMMARY OF THE INVENTION

It would be desirable to provide a network protection device and method operative to reliably and cost-effectively detect and isolate any current fault in an EPDN, in particular when the network is a microgrid, and/or when the network operates in island mode.

To better address one or more of these concerns, in a first aspect of the invention a network protection device is provided to protect an EPDN against a current fault. The EPDN comprises a plurality of safety devices adapted to electrically isolate a part of the EPDN when the current through the safety device exceeds a predetermined activation threshold. The network protection device comprises: a buffer configured to be coupled in parallel to the EPDN, and to store electric energy; a detector to detect a voltage in the EPDN; and a controller coupled to the buffer and the detector. The controller is configured to control, upon detecting a voltage dip in the EPDN which is representative of a short circuit condition in the EPDN by the detector, the buffer to discharge at least part of its stored electric energy into the EPDN, while generating a discharge current which is at least as high as to activate the safety device with the highest activation threshold in the EPDN. The network protection device comprises a charging circuit comprising a step-down transformer and charging switches configured to either couple the transformer between the EPDN and the buffer, or to couple the EPDN to the buffer while bypassing the transformer, wherein the charging switches are coupled to the controller. The controller is further configured to control the charging switches to couple the transformer between the EPDN and the buffer to thereby charge the buffer to a first charging level, and control the charging switches to couple the EPDN to the buffer while bypassing the transformer to thereby charge the buffer to a second charging level which is higher than the first charging level.

In another aspect of the invention, an EPDN is provided comprising a network protection device of the invention.

In this cost-effective way, using a combination of traditional fuses and/or circuit breakers in the network and in each customer's switchboard, and a centralised device containing an energy buffer, a suitable fault current with a suitable duration can be injected into the EPDN to selectively activate a safety device to isolate a network part containing the fault from the remaining network. The device subsequently restores the network's voltage so that any generator which has switched off during the transient fault, can reconnect and resume energy production.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a schematic diagram of an electric power distribution network in an embodiment of the present invention.
Figure 2 depicts a block diagram of an embodiment of a device of the present invention.
Figure 3 depicts a circuit diagram of an embodiment of a device of the present invention.
Figure 4 depicts a single-phase circuit diagram of an embodiment of a device of the present invention including a charging circuit.

### DETAILED DESCRIPTION OF EMBODIMENTS

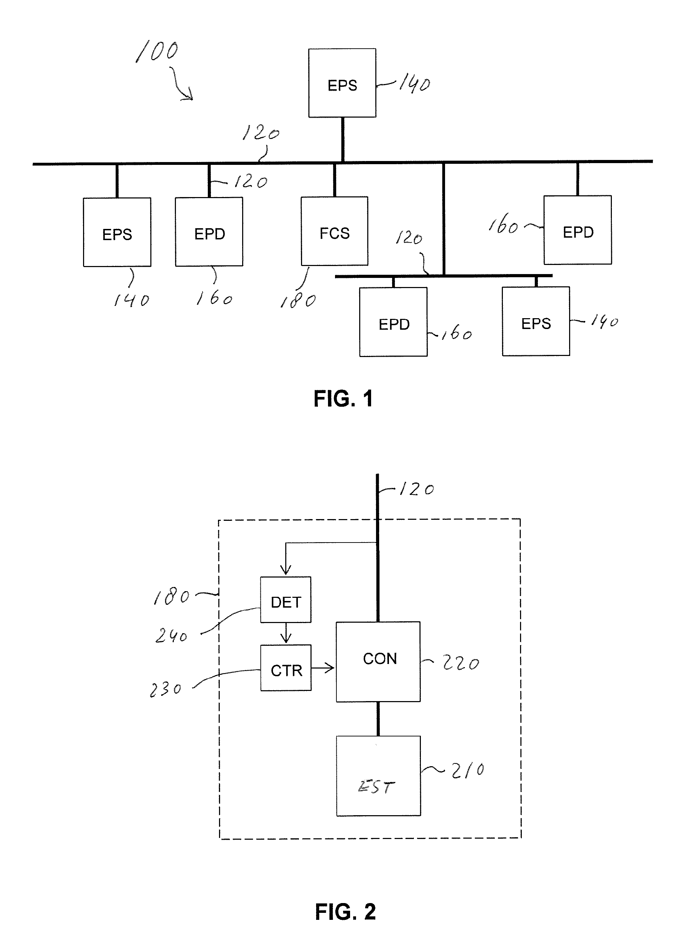

Figure 1 shows a schematic diagram of an electric power distribution network, EPDN, 100 comprising a plurality of network cables 120 interconnecting different electric power sources, EPSs, 140 and electric power drains, EPDs, 160. Examples of electric power sources are fuel cells, (micro) gas turbines, wind turbines, photovoltaic panels, etc. Examples of electric power drains are offices, individual residences, utilities, etc. A network protection device according to the present invention, also indicated as a fault current source, FCS, 180 is connected to the EPDN through one of the network cables 120. A connection between the FCS 180 and the network is to be made advantageously at the location where the largest power is fed into the network. Safety devices in the network, like thermal fuses or automatic circuit breakers (not shown in Figure 1) have activation thresholds coordinated with their location in the network, and with the power fed into the network at different locations.

Figure 2 shows an embodiment of the FCS 180 in more detail in a block diagram representation. The FCS 180 comprises an energy storage, EST, 210 in which energy is stored, and a converter, CON, 220 to convert the energy stored in EST 210 into electric energy to be supplied to the network cable 120, thereby discharging EST 210, or to convert electric energy supplied through the network cable 120 into energy to be stored in EST 210, thereby charging EST 210. Accordingly, the combination of EST 210 and CON 220 inputs and outputs electric energy from and into network cable 120, respectively.

EST 210 may actually store energy in a mechanical way, such as by a flywheel, wherein CON 220 represents a rotating electric motor/generator mechanically coupled to the flywheel, possibly supplemented with an AC/DC power electronic converter for a conversion of DC power to or from a DC motor/generator from or to an AC network, respectively, or an AC/AC power electronic converter for a conversion of AC power to or from an AC motor/generator from or to an AC network, respectively. Alternatively, or in addition thereto, EST 210 may store electric energy, such as in a battery, a superconducting winding, or a (super)capacitor bank, wherein CON 220 would constitute an AC/DC converter using power electronics to convert DC power to and from DC EST 210 from and to an AC network, respectively.

An energy conversion between EST 210 and the network connected thereto through network cable 120 is controlled by controller, CTR, 230, based on an input from a detector, DET, 240 measuring a characteristic of network electric properties, in particular the voltage thereof, more in particular a phase-to-neutral voltage for each phase or a phase-to-phase voltage for each pair of phases of a multi-phase network.

The FCS 180 may be implemented per phase, i.e. implemented to feed a discharge current into one phase only, on detection of a voltage dip which is representative of a short circuit condition in the phase by the DET 240. In such an embodiment, as many FCSs 180 are necessary as there are phases in the network. The FCS 180 may also be implemented to feed a discharge current into one or more phases, on detection of a voltage dip in any of the phases which is representative of a short circuit condition in any of these phases or between two ore more phases by the DET 240. In such an embodiment, only one FCS 180 may be necessary for the one or more phases of the network. The discharge current which is generated is at least as high and/or lasts for at least as long as to activate the safety device with the highest activation threshold in the (corresponding phase of the) EPDN.

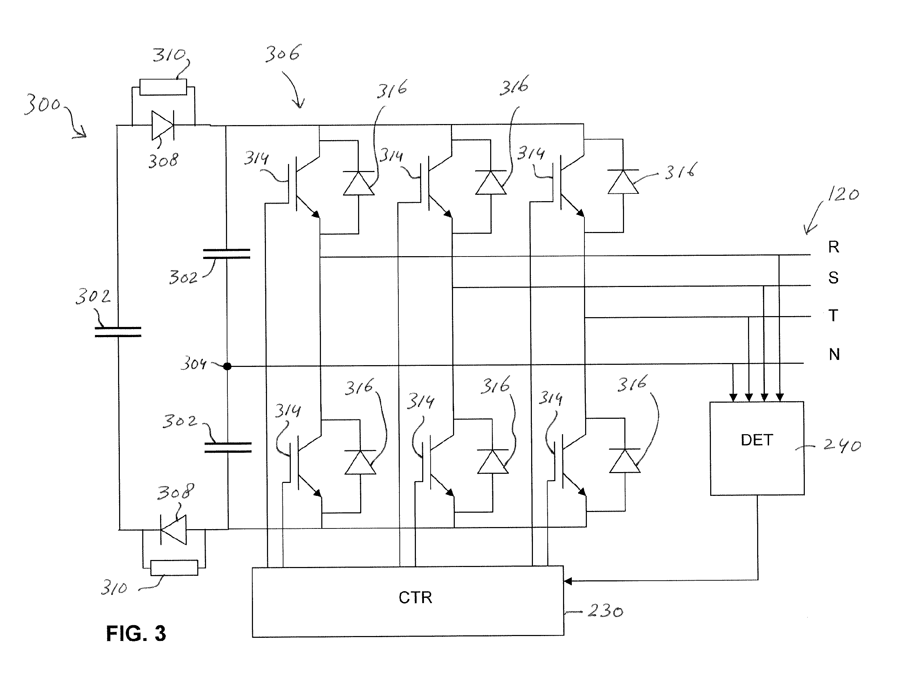

Figure 3 shows an exemplary embodiment of an FCS 300 in more detail. A buffer of electric energy is created by capacitors 302. A network having three phases R, S, T and a neutral line N is connected through a cable 120 to the arrangement of the capacitors 302 through a full bridge switching circuit 306, connected in series with two pairs of a parallel arrangement of a diode 308 and a resistor 310. The neutral line N is connected to a node 304 between capacitors 302. The full bridge switching circuit 306 comprises six semiconductor switches 314, such as Insulated Gate Bipolar Transistors, IGBTs (but not limited to such power transistors, or to transistors as such), each connected in parallel with an extrinsic or intrinsic free-running diode 316. The (gates) of the semiconductor switches 314 are driven by the controller CTR 230, based on input from the DET 240 detecting phase-to-neutral voltages R-N, S-N and T-N. It is remarked that the capacitor 302 at the most left side of the drawing may have a larger capacitance value than the two series connected capacitors 302: the leftmost capacitor 302 may thereby play a larger role in the buffering of energy, while the series connected capacitors may provide a reference (e.g. neutral) voltage level at node 304,

The operation of the FCS 300 is as follows.

Under normal operating conditions (no short circuit in the EPDN, normal phase voltages in the EPDN), the capacitors 302 are charged from the EPDN through the switching circuit 306 by a proper control of the semiconductor switches 314 by the CTR 230. The charging of the energy buffer is performed relatively slowly when compared to a possible discharging thereof, in other words, a charge current is lower, in particular substantially lower, than a discharge current.

The voltage(s) of the EPDN, in particular the phase-to-neutral voltage(s) or the phase-to-phase voltage(s), but not limited thereto, is/are monitored by the DET 240 to detect a voltage dip in the (phase(s) of the) EPDN which is representative of a short circuit condition in the (phase(s) of the) EPDN. The DET 240 is configured to detect the squared value of the detected voltage(s). The moving average of the squared value per half period of the AC network voltage is assessed, and low pass filtered in the DET 240. As long as the low pass filtered moving average stays above a predetermined threshold value which is representative of a short circuit condition, the charging of the capacitors 302 is continued, if the capacitors 302 are not yet charged to a predetermined maximum charging level. However, if the low pass filtered moving average of the voltage falls below a predetermined threshold value (i.e. a voltage dip occurs) which is representative of a short circuit condition, the DET 240 controls the CTR 230 to discharge at least part of the charge of the capacitors 302 into (on or more phases of) the EPDN through proper control of the semiconductor switches 314 by the CTR 230. By averaging and low pass filtering the voltage(s) measured by the DET 240, possible transient voltage changes which are not to be considered to be representative of a short circuit condition, will not lead to a discharge of the capacitors 302. By discharging the capacitors 302, a discharge current is generated which is at least as high as to activate the safety device with the highest activation threshold in the EPDN.

When a voltage dip has been detected, and the capacitors 302 discharge at least part of their stored electric energy into the EPDN, the semiconductor switches 314 are controlled by the CTR 230 to generate a voltage having a frequency, phase and amplitude in the EPDN which existed before the voltage dip was detected.

When a voltage dip has been detected, the semiconductor switches 314 are controlled by the CTR 230 to discharge the capacitors 302 at least partly into the EPDN at most during a predetermined first time period which is necessary to activate said safety device with the highest activation threshold in the EPDN, thus ensuring that the safety device which is adapted to isolate a part of the EPDN where the short circuit condition actually occurred, is activated. Once this specific safety device has been activated, and consequently said part of the EPDN has been isolated from the remaining part of the network, the discharge current lowers, whereby all remaining safety devices remain unactivated. CTR 230 controls the FCS 180 to generate a normal EPDN voltage during a second time period when the discharge of its stored electric energy into the EPDN is gradually decreased. DET 240 will detect normal operating conditions again in the remaining part of the EPDN, and the capacitors 302 will thereafter be charged again from the EPDN through the full bridge switching circuit 306.

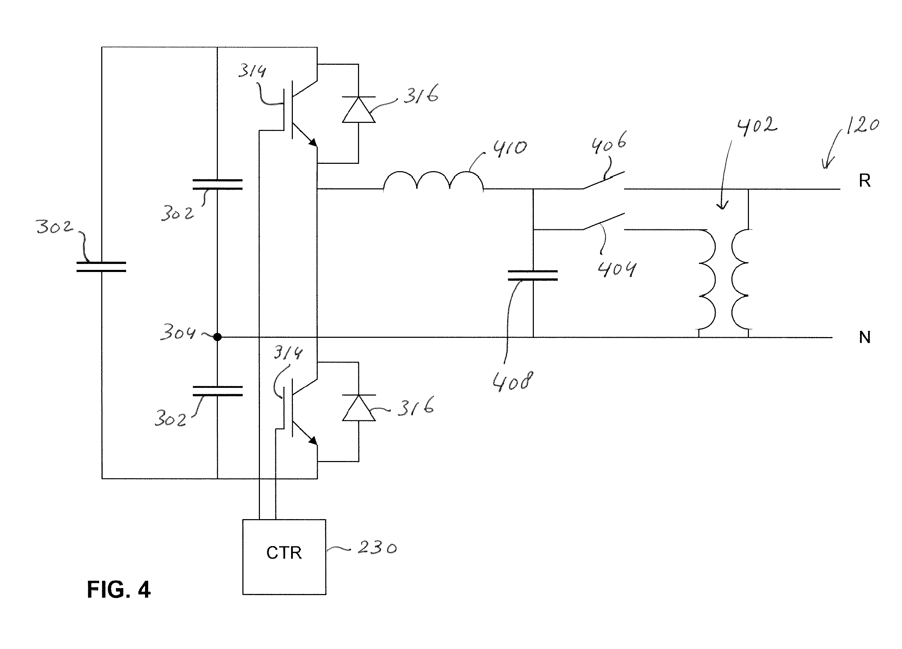

In order to improve the electrical efficiency of the FCS 180, the diodes 308 and resistors 310 as shown in Figure 3 may be removed. The initial charging of the capacitors 302 may be performed by a separate charging circuit which provides a charging process in different stages. An exemplary embodiment of such a charging circuit is depicted in Figure 4 for one phase R. In practice, it will be present in all phases of the FCS. The circuit comprises a transformer 402, a first charging switch (e.g. a semiconductor switch) 404, a second charging switch (e.g. a semiconductor switch) 406, a filter capacitor 408, and a filter inductor 410. CTR 230 has inputs (not shown in detail) for measuring voltages of the capacitors 302, and outputs (not shown in detail) for controlling not only semiconductor switches 314, but also the first and second charging switches 404, 406.

It is noted that in addition to the first charging switch 404 in the secondary winding of the transformer 402, also a third charging switch may be present in series with the primary winding of the transformer 402, whereby the first and the third charging switch are operated (i.e. opened or closed) substantially simultaneously.

It is further noted that the filter capacitor 408 and filter inductor 410 limit ripple currents in the charging circuit.

As seen from the EPDN, during initial charging of the capacitors 302, a phase of the charging circuit is connected to a transformer 402 supplying a voltage which is considerably lower than the phase-to-neutral (R-N) voltage of the EPDN, by providing the first charging switch 404 closed, and providing the second charging switch 406 open. The semiconductor switches 314 are not operated, and thus represent an open (non-conducting) circuit. The impedance of the transformer 402 is selected such that during initial charging of the capacitors 302, the current that flows from the EPDN into the transformer 402 does not exceed a predefined threshold. With the first charging switch 404 closed and the second charging switch 406 still open, when the voltage across the capacitors 302 is approximately equal to twice the peak value of the phase-to-neutral (R-N) voltage of the EPDN transformed down by the transformer 402, the semiconductor switches 314 are controlled such that the power electronic circuit boosts the transformer output voltage, so that the voltage across the capacitors 302 is increased further. This mode of operation continues until the voltage across the capacitors 302 is approximately equal to twice the peak value of the phase-to-neutral voltage of the EPDN. The first charging switch 404 is then opened and the second charging switch 406 is closed, thereby connecting the power electronic converter directly to the EPDN. The semiconductor switches 314 are controlled such that the power electronic circuit boosts the line-to-neutral (R-N) voltage and the voltage across the capacitors 302 is increased further, until it is equal to a predetermined maximum value.

In order to improve the economic feasibility of the FCS 180 as a general building block, a modular approach may be used. This approach implies that a standard building block is based on, for example, a commercially available IGBT module rated for 500 Aᵣₘₛ during 5 seconds. If a higher current or more energy is required, this could be arranged by putting several identical modules in parallel.

According to the above, an EPDN is protected against a current fault. The EPDN incorporates a plurality of safety devices to electrically isolate a part of the EPDN when the current through a safety device exceeds a predetermined activation threshold. In the EPDN, a short circuit condition can be detected by a voltage dip. In a network protection device, electric energy is stored in an energy buffer. Upon detecting a voltage dip in the EPDN, the network protection device discharges at least part of the stored energy electrically into the EPDN, while generating a discharge current which is at least as high as to activate the safety device with the highest activation threshold in the EPDN. Thus, it is ensured that only a part of the EPDN containing the short circuit condition is isolated from the remaining part of the EPDN.

The FCS 180 may also be used to support the voltage in the EPDN during short voltage dips. In case of a microgrid, this ensures that microsources will not be disconnected as a consequence of such a dip. In this way the FCS offers a contribution to the power quality as an additional benefit. As an embodiment, a use of the FCS as a fault-ride-through device for wind turbines is given. Some types of wind turbines, in particular older types of wind turbines, but not limited thereto, are separated directly from an EPDN when a voltage dip occurs, since such a voltage dip could lead to damage to the turbine. However, to support the network, an amount of reactive power is needed at the time of the voltage dip (no short-circuit current is necessary). An FCS, connected in parallel to the wind turbine, may be used to fulfill this requirement. The FCS, if activated when a voltage dip occurs, and a subsequent separation of the wind turbine from the EPDN occurs, can inject the reactive power into the network, and can also supply the power that the wind turbine would have supplied, until the wind turbine has been connected to the EPDN again. Accordingly, an FCS may bridge the time period between separation from, and reconnection to the EPDN of the wind turbine, during which time period a safety device (not triggered by the FCS current) in the EPDN has reacted to the voltage dip. Accordingly, in such an embodiment a network protection device to be coupled in parallel to a wind turbine protects an electric power distribution network, EPDN, against a current fault, the EPDN comprising a plurality of safety devices adapted to electrically isolate a part of the EPDN when the current through the safety device exceeds a predetermined activation threshold, the network protection device comprising:
a buffer configured to be coupled in parallel to the EPDN, and to store electric energy;
a detector to detect a voltage in the EPDN; and
a controller coupled to the buffer and the detector,
wherein the controller is configured to control, upon detecting a voltage dip in the EPDN which is representative of a short circuit condition in the EPDN by the detector, and detecting that the wind turbine is disconnected from the EPDN by the detector, the buffer to discharge at least part of its stored electric energy into the EPDN, while generating reactive power and power that the wind turbine would have supplied, until the wind turbine has been connected to the EPDN again. The basic block diagrams of Figures 2 and 3 and their description do also apply to such a situation of protecting an EPDN comprising a wind turbine.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically, but also e.g. electrically.

A single processor or other unit may fulfil the functions of several items recited in the claims.

## Claims

1. A network protection device to protect an electric power distribution network, EPDN, against a current fault, the EPDN comprising a plurality of safety devices adapted to electrically isolate a part of the EPDN when the current through the safety device exceeds a predetermined activation threshold, the network protection device comprising:
a buffer configured to be coupled in parallel to the EPDN, and to store electric energy;
a detector to detect a voltage in the EPDN; and
a controller coupled to the buffer and the detector,
wherein the controller is configured to control, upon detecting a voltage dip in the EPDN which is representative of a short circuit condition in the EPDN by the detector, the buffer to discharge at least part of its stored electric energy into the EPDN, while generating a discharge current which is at least as high as to activate the safety device with the highest activation threshold in the EPDN,
wherein the network protection device comprises a charging circuit comprising a step-down transformer and charging switches configured to either couple the transformer between the EPDN and the buffer, or to couple the EPDN to the buffer while bypassing the transformer, wherein the charging switches are coupled to the controller, and wherein the controller is further configured to:
control the charging switches to couple the transformer between the EPDN and the buffer to thereby charge the buffer to a first charging level, and
control the charging switches to couple the EPDN to the buffer while bypassing the transformer to thereby charge the buffer to a second charging level which is higher than the first charging level..

2. The network protection device of claim 1, wherein the controller is configured to control, when the buffer discharges at least part of its stored electric energy into the EPDN, the buffer to generate a voltage having a frequency, phase and amplitude which existed before said voltage dip was detected.

3. The network protection device of claim 1 or 2, wherein the controller is configured to control the buffer to discharge at least part of its stored electric energy at most during a predetermined first time period which is necessary to activate said safety device with the highest activation threshold in the EPDN.

4. The network protection device of claim 3, wherein the controller is configured to control, after the first time period, the buffer to generate the normal EPDN voltage during a second time period.

5. The network protection device of claim 4, wherein the controller is configured to control, during the second time period, the buffer to gradually decrease the discharge of its stored electric energy into the EPDN.

6. The network protection device of any of the preceding claims, wherein the controller is configured to control, when the detector does not detect said voltage dip, the buffer to store electric energy from the EPDN with a charge current which is lower than the discharge current.

7. The network protection device of any of the preceding claims, wherein the buffer comprises:
a capacitor bank coupled to a DC/AC converter, and/or
a battery coupled to a DC/AC converter, and/or
a flywheel coupled to a rotating electric motor/generator.

8. The network protection device of any of the preceding claims, wherein the detector is configured to detect the squared value of an EPDN voltage.

9. The network protection device of any of the preceding claims, wherein the detector is configured to detect EPDN phase-to-neutral or phase-to-phase voltages.

10. The network protection device of claim 8 or 9, wherein the detector is configured to detect the moving average of the squared value of the detected voltage.

11. The network protection device of claim 10, wherein the detector is configured to lowpass filter the moving average of the squared value of the detected voltage.

12. An electric power distribution network, EPDN, comprising a device according to any of the preceding claims for protecting the EPDN against a current fault.

13. The EPDN of claim 12, wherein the network is operated in island mode.
